Europäisches Patentamt

(19) European Patent Office

Office européen des brevets

(11) Veröffentlichungsnummer: **0 238 898**
**B1**

(12) **EUROPÄISCHE PATENTSCHRIFT**

(45) Veröffentlichungstag der Patentschrift:
**20.06.90**

(51) Int. Cl.⁵: **F16L 23/00**, F16L 37/26

(21) Anmeldenummer: **87102994.8**

(22) Anmeldetag: **03.03.87**

(54) **Rohrverbindungseinrichtung.**

(30) Priorität: **27.03.86 DE 3610553**
**07.10.86 DE 3634113**

(43) Veröffentlichungstag der Anmeldung:
**30.09.87 Patentblatt 87/40**

(45) Bekanntmachung des Hinweises auf die Patenterteilung:
**20.06.90 Patentblatt 90/25**

(84) Benannte Vertragsstaaten:
**FR GB IT SE**

(56) Entgegenhaltungen:
**CH-A- 420 750**
**DE-C- 585 377**
**US-A- 1 579 149**
**US-A- 3 260 539**
**US-A- 3 863 962**

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Zinner, Hans, Feldiglstrasse 23, D-8060 Dachau(DE)**
Erfinder: **Kaupp, Hans, Sonnenstrasse 8, D-8890-Aichach-Klingen(DE)**

## Beschreibung

Die Erfindung bezieht sich auf eine Rohrverbindungseinrichtung nach dem Oberbegriff des Patentanspruchs 1.

Beispielsweise Gasturbinentriebwerke für den stationären Einsatz oder für den Flugbetrieb werden mit Wärmetauschern ausgerüstet, um die Verbrennungsluft mittels eines Teiles der im Triebwerksabgasstrom enthaltenen Wärme aufzuheizen. Dabei sind Rohrleitungen und Rohrverbindungen erforderlich, um u.a. den Abgasstrom in Richtung auf die mittels Druckluft durchströmte Rohrmatrix des Wärmetauschers oder aus der Matrix in Richtung auf einen Abgaskanal zu leiten oder um z.B. die aus der Matrix abströmende aufgeheizte Druckluft dem betreffenden Verbraucher, hier also insbesondere der Brennkammer, zuzuführen.

In allen diesen oder ähnlichen Fällen müssen betreffende Rohrleitungen und deren Flanschverbindungen oftmals unter geringen zur Verfügung stehenden Einbauraumverhältnissen angeordnet bzw. verlegt werden; die knappen räumlichen Einbaubedingungen gehen mit den Anforderungen einher, daß eine betreffende Rohrflanschverbindung zwecks Montage und Demontage nur von einer Rohrseite bzw. von oben oder unten aus zugänglich ist, zugleich aber die Voraussetzungen einer optimalen Fluid- bzw. Gasabdichtung über dem gesamten Umfang der Rohrflanschverbindung erfüllt werden sollen. Insbesondere bezüglich eines zu führenden Heißgasstromes soll eine derartige Flanschverbindung ferner hochtemperaturfest sowie verschleißarm ausgebildet sein.

Bisher bekannte Flanschverbindungskonzepte - auch bezüglich rechteckiger oder quadratischer Rohranschlußquerschnitte – erfüllen zwar schon die Voraussetzung einer guten gleichförmigen Abdichtung, setzen aber andererseits das Vorhandensein mehrerer gleichförmig über dem Umfang verteilter Schraubverbindungen voraus, die somit im wesentlichen eine allseitige Zugänglichkeit zur Rohrflanschverbindung zwecks Montage oder Demontage erzwingen.

Eine dem Oberbegriff des Patentanspruchs 1 zugrunde gelegte und aus der US-A 1 579 149 bekannte Rohrverbindungseinrichtung dürfte vorrangig im Hinblick auf den Einsatz als «Rohrkupplung» für von Flüssigkeiten, wie Öl (pipeline), durchströmte, stets kreiszylindrische Rohre konzipiert zu verstehen sein. Dabei setzt der bekannte Fall sowohl in radialer als auch quer geschnitten dargestellter Lage einen von der offenen Einschubseite aus sich jeweils beidseitig gleichförmig nach innen verjüngenden Keilflächenverlauf des Umfangsflansches und entsprechender Nut-Gegenflächen am Rahmen voraus; lediglich eine die Rohrdurchströmung gewährleistende Ringscheibendichtung soll quer zwischen zwei benachbarten Flächen des Rahmens und des Flansches angeordnet sein. Ansonsten beruht die Abdichtwirkung auf einem gegenseitig flächenebenen Preßsitz, der nur bei hochpräziser Flächenbearbeitung eine einigermaßen zufriedenstellende Dichtwirkung im Hinblick auf im wesentlich gleichförmig temperiert durchzusetzende Flüssigkeiten gewährleisten dürfte. Im Hinblick auf insbesondere extrem unterschiedliche Gas- oder Heißgastemperaturen dürfte mit einem gegenseitigen Flächenverzug und damit einhergehenden Undichtigkeiten zu rechnen sein. Mit Rücksicht auf genannten Flächenverzug bei unmittelbarer Keilflächenpress-Dichtung (Festpressung) dürften erhebliche Demontageschwierigkeiten nicht auszuschließen sein.

Ferner soll im bekannten Fall auf der einen Seite des z.B. nach oben hin flansch- und dazu versetzt rohreinschubseitig offenen Rahmens ein Bügel verschwenkbar angeordnet sein, der auf gegenüberliegender Rahmenseite nut-/zapfenartig verriegelbar ist (Betriebsstellung); dabei soll die einschubseitige Flanscheinpressung über eine durch den Bügel hindurchgeführte Schraube unter deren unmittelbarer Flanschkontaktierung hervorgerufen werden; mithin bildet dabei der Bügel keinen die Verbindung (Flansch-Rahmenpartien) einschubseitig unter homogener Anpresskraftverteilung abdichtenden und zangenartig umgreifenden Verschluß aus.

Im Rahmen der aufgezeigten Problematik liegt der Erfindung die Aufgabe zugrunde, eine Rohrverbindungseinrichtung gemäß Oberbegriff des Patentanspruchs 1 anzugeben, die trotz ausschließlicher Zugänglichkeit von einer Seite – bzw. von oben oder unten – extrem einfach montier- oder demontierbar und über dem gesamten gegenseitigen Rohranschlußumfang optimal abdichtbar sowie extrem temperaturbeständig ist.

Die gestellte Aufgabe ist mit den Merkmalen des Kennzeichnungsteils des Patentanspruchs 1 erfindungsgemäß gelöst.

Auf diese Weise ist es möglich, das mit dem Flansch versehene eine Rohrende von der zugänglichen Seite bzw. von oben in die betreffende Nut des Rahmens hineingleiten zu lassen.

Im Wege der ausgestaltungsgemäß beispielsweise vorgesehenen Dichtschnur können dann, infolge des gänzlichen Flanscheinschubes in den betreffenden, drei Rohrseiten umspannenden Rahmen, die Voraussetzungen für eine zugleich drei Rohrseiten umfassende einwandfreie Abdichtung geschaffen werden.

Die gesamtumfangsseitige Abdichtung gemäß den betrieblichen Anforderungen wird einfachst durch die z. B. von oben auf die offene Seite des Rahmens aufgeschraubte Abdeckleiste realisiert, mit der der Flansch abdichtend in der Umfangsnut des drei Rohrendseiten umspannenden Rahmens verspannt sowie ferner auf der offenen Einschubseite mit dem übrigen Rahmenteil klammerartig abdichtend zusammengespannt wird.

Durch beispielsweise zwei oder drei Schrauben kann demzufolge die Abdeckleiste und damit die gesamte Flanschverbindung – nach erfolgtem Flanscheinschub – einfach fertig montiert oder aber demontiert werden, und zwar ausschließlich von einer Seite bzw. von oben aus.

Anhand der Zeichnungen ist die Erfindung beispielsweise weiter erläutert; es zeigen:

Fig. 1 eine entlang der Ebene einer hier oberen Rohrverschraubung längs geschnittene Ansicht zweier benachbarter Rohrenden nebst Flanschverbindungseinrichtung,

Fig. 2 eine Schnittansicht gemäß II-II der Fig. 1 und

Fig. 3 die vergrößerte Einzelheit C aus Fig. 1.

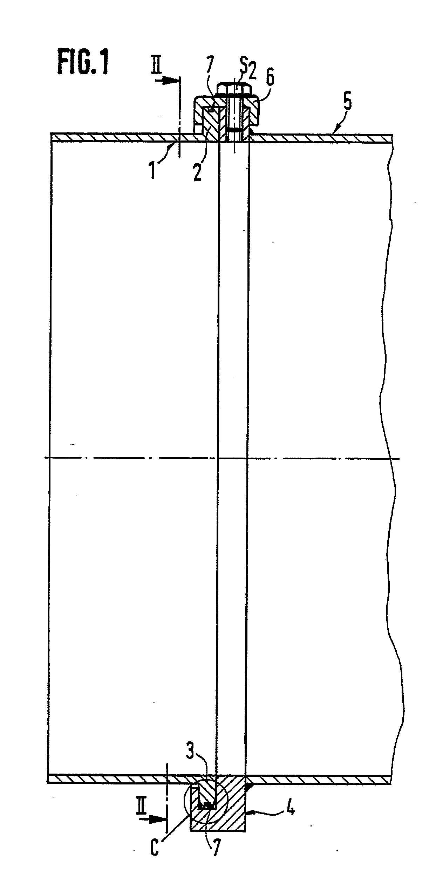

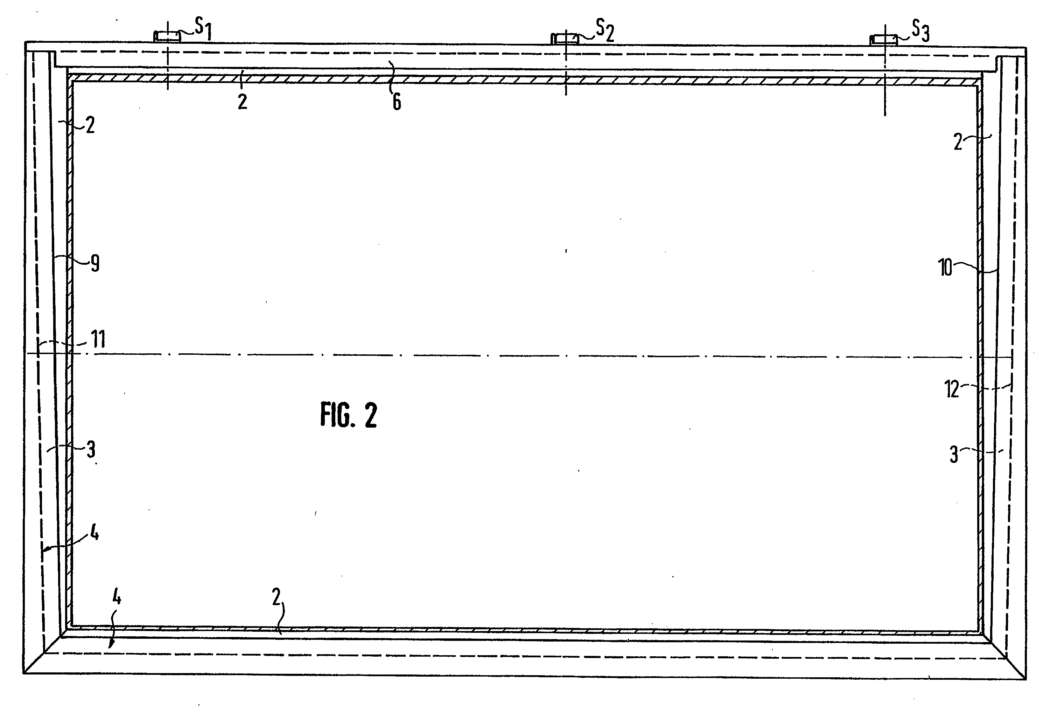

Fig. 1 und 2 erläutern die erfindungsgemäße Rohrflanschverbindung an hier z. B. rechteckigen Rohranschlußenden.

Dabei soll ein erstes Rohrende 1 als viereckiger Flansch 2 ausgebildet sein, der von außen in eine drei seiner Endflächen umspannende Umfangsnut 3 eines Rahmens 4 am zweiten Rohrende 5 eingeschoben wird; die nach außen offene oder Einschubseite des Rahmens 4 wird nach vollzogenem Einschubvorgang mittels einer z. B. darauf aufgeschraubten (Schrauben $S_1$, $S_2$, $S_3$) Abschlußleiste 6 abgedeckt, die den Rahmen 4 und den Flansch 2 entlang der verbliebenen vierten Endfläche beider Rohrenden zangenartig umspannt.

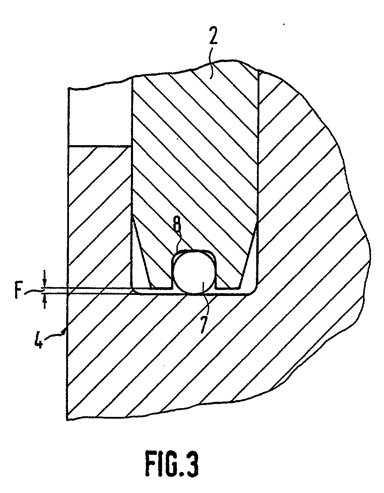

Zwecks einwandfreier Abdichtung der Rohrflanschverbindung sollen zwischen äußeren Endflächen des Flansches 2 und betreffenden Gegenflächen des Rahmens 4 oder der Abschlußleiste 6 Dichtmittel angeordnet sein. Beispielsweise kann als Dichtmittel eine Dichtschnur 7 (Fig. 1 und 3) vorgesehen sein, die in betreffende außenrandseitig in den Flansch 2 eingearbeitete Nuten 8 zumindest teilweise eingebettet ist. Die Dichtschnur 7 soll dabei also in sich geschlossen und um die betreffenden Flansch- bzw. Nutenecken herumgeführt sein. Je nach verlangter Steifigkeit der Dichtung kann daher im Betriebszustand ein Spalt F (Fig. 3) zwischen den metallischen Endflächen des Flansches 2 und den betreffenden Nutgrundflächen zugrunde gelegt werden oder nicht.

Wie insbesondere aus Fig. 2 ersichtlich, kann der Flansch 2 mit seitlich einander gegenüberliegenden Partien - von der Abschlußseite 6 aus gesehen - in Richtung auf den gegenüberliegenden Nutgrund des Rahmens 4 leicht gleichmäßig keilförmig verjüngt ausgebildet sein.

Ferner können einander gegenüberliegende Flächenabschnitte 9, 10 des Rahmens 4 nebst betreffenden Flächenabschnitten 11, 12 der Umfangsnut 3 im Sinne der korrespondierenden Flanschpartien verjüngt ausgebildet sein.

Die angegebene leicht keilförmige Verjüngung begünstigt die Montage oder Demontage und wirkt sich ferner auf einen optimalen gleichförmigen Dichtsitz des Flansches 2 in der Umfangsnut 3 des Rahmens 4 äußerst vorteilhaft aus.

Der betrieblich gewünschte optimale Dichtpreßsitz ist dann erreicht, wenn die Abschlußleiste 6 endgültig fest mit dem einseitig frei zugänglichen Abschnitt des Rahmens 4 verbunden, also z. B. verschraubt worden ist.

Die Erfindung kann bei gänzlich quadratischen oder rechteckigen Rohrleitungen vorteilhaft eingesetzt werden. Sie kann aber auch bei Rohrleitungen vorteilhaft eingesetzt werden, die im allgemeinen einen kreisförmigen Querschnitt aufweisen, wobei lediglich die in der Flanschverbindung einander benachbarten Rohrendsektionen quadratische oder rechteckige Querschnitte aufweisen.

**Patentansprüche**

1. Rohrverbindungseinrichtung, bei der anschlußseitig kommunizierende Rohrenden flanschartig fluiddicht miteinander gekoppelt sind, indem ein erstes Rohrende (1) einen viereckigen Umfangsflansch (2) ausbildet, der in eine Umfangsnut (3) eines einseitig offenen Rahmens (4) eines zweiten Rohrendes (5) eingeschoben ist, dadurch gekennzeichnet, daß
   - das erste und zweite Rohrende (1, 5) viereckig ausgebildet sind,
   - die offene Seite des Rahmens (4) mit einer daran befestigten Abschlußleiste (6) abgedeckt ist, welche daran angrenzende Rahmen- und Flanschpartien zangenartig umspannt,
   - zwischen äußeren Umfangsendflächen des Flansches (2) und zugehörigen Gegenflächen des Rahmens (4) und der Abschlußleiste (6) Dichtmittel angeordnet sind.

2. Rohrverbindungseinrichtung nach Anspruch 1, dadurch gekennzeichnet, daß die Abschlußleiste (6) auf die offene Rahmenseite aufgeschraubt ist.

3. Rohrverbindungseinrichtung nach Anspruch 1 oder 2, dadurch gekennzeichnet, daß als Dichtmittel eine Dichtschnur (7) vorgesehen ist, die in außenrandseitig in den Flansch (2) eingearbeitete Nuten (8) zumindest teilweise eingebettet ist.

4. Rohrverbindungseinrichtung nach einem oder mehreren der Ansprüche 1 bis 3, dadurch gekennzeichnet, daß sich der Flansch (2) von der Abschlußleiste (6) aus in Richtung auf den gegenüberliegenden Nutgrund des Rahmens (4) fortlaufend gleichförmig verjüngt.

5. Rohrflanschverbindung nach Anspruch 4, dadurch gekennzeichnet, daß einander gegenüberliegende Flächenabschnitte (9, 10) des Rahmens (4) nebst betreffenden Flächenabschnitten (11, 12) der Umfangsnut (3) ebenfalls im Sinne korrespondierender Flanschpartien fortlaufend gleichförmig verjüngt sind.

**Claims**

1. A pipe connecting device in which, on the connection side, communicating pipe ends are coupled to each other in a flange-like fluid-tight manner in that a first pipe end (1) develops into a square peripheral flange (2) which is pushed in to a peripheral groove (3) in a frame (4) which is open on one side and which is on a second pipe end (5), characterised in that
   - the first and second pipe ends (1, 5) are of square construction,
   - the open side of the frame (4) is covered by, fixed thereon, a closure strip (6) which fits like a clamp around adjacent parts of frame and flange,
   - sealing means are disposed between outer peripheral end faces of the flange (2) and the associated mating surfaces of the frame (4) and of the closure strip) (6)

2. A pipe connecting device according to claim 1, characterised in that the closure strip (6) is screwed onto the open side of the frame.

3. A pipe connecting device according to claim 1 or 2, characterised in that the sealing means provided is a sealing ring (7) which is at least partially embedded in grooves (8) machined into the outer edge of the flange (2).

4. A pipe connecting device according to one or more of claims 1 to 3, characterised in that starting from the closure strip (6) the flange (2) progressively and uniformly tapers in the direction of the oppositely disposed bottom of the groove in the frame (4).

5. A pipe flange joint according to claim 4, characterised in that oppositely disposed portions (9, 10) of the surface of the frame (4), together with relevant portions (11, 12) of the surface of the peripheral groove (3) are likewise progressively and uniformly tapered to constitute corresponding flange parts.

## Revendications

1. Dispositif pour raccord de tuyaux, par lequel des extrémités de tuyaux communiquants côté raccordement sont accouplées par bride avec étanchéité pour les fluides, tandis qu'une première extrémité de tuyau (1) constitue une bride de pourtour (2) rectangulaire, qui est insérée dans une rainure de pourtour (3) d'un cadre, ouvert sur un côté, d'une deuxième extrémité de tuyau (5), caractérisé en ce que:
— la première et la deuxième extrémité de tuyau (1, 5) sont réalisées rectangulaires,
— le côté ouvert du cadre (4) est recouvert d'une barre de jonction (6) fixée sur lui, laquelle met en serrage à la façon d'une pince les parties contigües du cadre et de la bride,
— des moyens d'étanchéité sont disposés entre les surfaces d'extrémité extérieures du pourtour de la bride (2) et les surfaces opposées appartenant au cadre (4) et à la barre de jonction (6).

2. Dispositif pour raccord de tuyau selon la revendication 1, caractérisé en ce que la barre de jonction (6) est fixée par une vis sur le côté ouvert du cadre.

3. Dispositif pour raccord de tuyau selon une des revendications 1 ou 2, caractérisé en ce qu'un cordon d'étanchéité (7) est prévu comme moyen d'étanchéité, qui est inséré au moins partiellement dans des rainures (8) façonnées dans la bride (2), côté bord extérieur.

4. Dispositif pour raccord de tuyau selon une ou plusieurs des revendications 1 à 3, caractérisé en ce que la bride (2) s'amincit uniformément et de façon continue depuis la barre de jonction (6) en direction de la base opposée de la rainure du cadre (4).

5. Dispositif pour raccord de tuyau, selon la revendication 4, caractérisée en ce que les tronçons plans (9, 10) du cadre (4), opposés l'un à l'autre, avec leurs segments (11, 12) plans concernés de rainure périphérique (3) vont en s'amincissant également uniformément et de façon continue dans le sens correspondant des montants de bride.

**FIG.1**

FIG. 2

EP 0 238 898 B1

FIG.3